# EUROPÄISCHE PATENTANMELDUNG

(11) **EP 0 852 368 A1**
(43) Veröffentlichungstag der Anmeldung: **08.07.1998**
(21) Anmeldenummer: 96120294.2
(22) Anmeldetag: 18.12.1996
(51) Int. Cl.: G08C 23/04, H04B 10/22

(54) **Verfahren zum berührungslosen Übertragen von Messwerten**

(71) Anmelder: KTR KUPPLUNGSTECHNIK GMBH, D-48432 Rheine (DE)
(72) Erfinder: RIEG, Frank, Dr.-Ing., 48432 Rheine (DE); Pietsch, Johannes, Dipl.-Ing., 48429 Rheine (DE)
(74) Vertreter: Arendt, Helmut, Dipl.-Ing.

(57) **Zusammenfassung**

Zum berührungslosen Übertragen von Meßwerten rotierender Maschinenteile auf stehende Auswerteeinheiten wird ein analoges Eingangssignal in ein digitales gewandelt und in ein übertragungsfähiges Binärprotokoll überführt, welches einer Leucht- oder Sendediode zugeführt wird. Der Lichtstrahl mit im Takt des Binärprotokolls schwankender Intensität wird optisch zu einem geschlossenen Ring geformt, wobei die synchron im Takt der binären Datenübertragung schwankende Lichtintensität des Lichtringes von einer Empfangsdiode aufgenommen und deren Ausgangssignale digital weiterverarbeitet und als digitale oder nach entsprechender Wandlung als analoge Ausgangssignale ausgegeben werden. Dieses Verfahren ermöglicht den Einsatz sehr preiswerter Bauteile.

## Beschreibung

Die Erfindung betrifft ein Verfahren zum berührungslosen Übertragen von an rotierenden Maschinenelementen ermittelten Meßwerten auf stehende Auswerteeinheiten.

Analoge oder digitale elektrische Meßwerte für Drücke, Temperaturen, Kräfte, Drehzahlen, Drehmomente und dergleichen, die auf rotierenden Wellen anfallen und durch geeignete Sensoren gewonnen werden, müssen zur Auswertung auf ortsfeste Einheiten übertragen werden. Diese Aufgabenstellung kommt in der Technik sehr häufig vor.

Bekannt ist der Einsatz von Schleifringen, Funkübertragungsstrecken, Transformatoren und rotierenden Glasfaserbündeln.

Der Einsatz von Schleifringen verursacht durch teure Materialien (Gold) hohe Kosten. Außerdem sind Schleifringe verschleißanfällig.

Funkstrecken können leicht durch starke Felder von Elektromotoren oder Transformatoren gestört werden. Es besteht nur eine begrenzte Verfügbarkeit von unbenutzten Frequenzen. In jedem Fall ist eine FTZ-Genehmigung Voraussetzung für den Einsatz.

Das Transformatorprinzip ist ebenfalls nachteilig, da Störungen durch starke Felder von Elektromotoren oder Transformatoren auftreten können. Das Transformatorprinzip ist außerdem nur begrenzt für hohe Übertragungsraten geeignet und mit hohen Kosten verbunden.
Rotierende Glasfaserbündel erfordern eine präzise Herstellung und sind teuer.
Insgesamt eignen sich die bekannten Verfahren mit Hilfe der genannten Mittel fast ausnahmslos nur für den Laborbereich.

Aufgabe der Erfindung ist es, ein berührungsloses Übertragungsverfahren der eingangs genannten Gattung zu schaffen, das keines der vorgenannten negativen Merkmale aufweist und insbesondere den Einsatz sehr preiswerter Elemente ermöglicht.
Die Erfindung löst die genannte Aufgabe dadurch, daß ein analoges Eingangssignal in ein digitales gewandelt wird, daß das digitale Signal in ein übertragungsfähiges Binärprotokoll überführt wird, welches nach gegebenenfalls notwendiger Verstärkung einer Leucht- oder Sendediode zugeführt und der Lichtstrahl mit im Takt des Binärprotokolls schwankender Intensität optisch zu einem geschlossenen Ring geformt wird und daß die synchron im Takt der binären Datenübertragung schwankende Lichtintensität des Lichtringes von einer Empfangsdiode aufgenommen und deren Ausgangssignale gegebenenfalls verstärkt digital weiterverarbeitet und als digitale oder nach einer Digital-/Analogwandlung als analoge Ausgangssignale ausgegeben werden.

Die Formung des Lichtstrahls zu einem Lichtring schwankender Intensität kann sehr preiswert durch einen einfachen Ring aus einem klarsichtigen Material geschehen, der von der Sendediode beleuchtet wird. Als Material kann sowohl Glas als auch klarsichtiger Kunststoff, beispielsweise Acrylglas, verwendet werden. Der Ring kann auch hohl ausgebildet und mit einem Medium, das besondere lichtleitende Eigenschaften aufweist, gefüllt sein.

Das erfindungsgemäße Verfahren bietet die Möglichkeit, den Lichtring mit einer umlaufenden Welle rotieren zu lassen und die den Lichtring abtastende Empfangsdiode ortsfest ruhend anzuordnen.
Alternativ kann die gesamte Empfangselektronik mit dem Lichtring ortsfest ruhend ausgebildet werden, wobei dann die Sendediode den Lichtring umkreisend mit dem Licht-Binär-Signal beaufschlagt.

Weitere den Anmeldungsgegenstand vorteilhaft gestaltende Merkmale sind in den Patentansprüchen offenbart.

In der Zeichnung sind Ausführungsbeispiele der Erfindung schematisch dargestellt und nachstehend erläutert. Es zeigen:
- Figur 1: eine Einrichtung, deren Glasring mit der Sendeelektronik rotiert und deren Empfangsdiode ortsfest gehalten ist,
- Figur 2: eine Einrichtung mit ortsfest angeordnetem Glasring und ortsfester Empfangs- und Auswerteelektronik und
- Figur 3: einen Glasring mit axial gerichtetem Lichtführungsansatz.

Ein analoges Eingangssignal 1 wird in einem Wandler 2 analog/digital gewandelt und einem Mikroprozessor/Mikrocontroller 3 zugeführt. Gegebenenfalls kann die Analog-/Digitalwandlung auch direkt in einem Mikrocontroller erfolgen. Der Mikrocontroller wandelt das digitale Rohsignal in ein übertragungsfähiges Binärprotokoll ähnlich den seriellen Interfaces, wie sie von Computern her bekannt sind, zum Beispiel nach einem der IEEE-Standards. Das Binärprotokoll wird gegebenenfalls über einen Verstärker 4 verstärkt und einer Sendediode 5 zugeführt, die vorzugsweise eine Infrarotstrahlung emittiert. Der Lichtstrahl beleuchtet einen einfachen Glasring 6, in welchen der Lichtstrahl vorzugsweise über einen Lichtleiteinsatz 7 gelangt.

Der Glasring kann aus natürlichem Glas oder einem klarsichtigen Kunststoff, insbesondere Acrylglas, bestehen. Ferner kann der Ring hohl gestaltet und mit einem Medium gefüllt sein. Der Glasring wird durch den Eintritt der Strahlung zum Leuchten gebracht, sofern es sich um Licht im sichtbaren Frequenzbereich handelt. Die mit den Bezugsziffern 2 bis 7 bezeichneten Elemente der Einrichtung laufen mit der drehenden Welle um, deren Meßdaten übertragen werden sollen. Eine feststehende Empfangsdiode 8 nimmt die empfangenen Lichtsignale unterschiedlicher Intensität auf und leitet sie gegebenenfalls über einen Verstärker 9 in einen Mikroprozessor/Mikrocontroller 10 einer Auswerteelektronik. Das durch den Mikrocontroller weiterverarbeitete Signal kann als digitales BCD-Ausgangssignal 11 ausgegeben werden. Durch einen dem Mikrocontroller folgenden Digital-/Analogwandler 12 wird das Ausgangssignal auch als Analogsignal 13 ausgegeben.

Durch die sehr einfache und kostengünstige Gestaltung wird der Glas- oder Geberring in der Nähe der Lichteinspeisung besonders hell und an der der Lichteinspeisung am weitesten abgewandten Seite am wenigsten hell im Takt des Binärprotokolls strahlen. Die Lichtintensität, welche die ortsfeste Empfangsdiode 8 oder ein Fototransistor zur Auswertung bekommt, schwankt also nicht nur synchron im Takt der binären Datenübertragung, d.h. im Takt des eigentlichen Nutzsignals, sondern wird zusätzlich durch die Geometrie des Glasringes beeinflußt. Die simple Geber-Ringgestaltung bedingt also einen variablen Offset 14. Mit diesem Offset sind die synchron im Takt der binären Datenübertragung schwankenden Lichtsignale unterlegt. Dieser variable Offset kann, wie bei dem gezeigten Beispiel, sinusförmig, aber auch dreiecksförmig, oder regellos sein. Solange immer die logischen "0"-Signale über der Eingangsempfindlichkeit 15 der Empfangsdiode und unterhalb des mit logisch "0" bezeichneten Pegels 18 liegen und die logischen "1"-Signale über dem als logisch "1" definierten Pegel 16 liegen, was durch entsprechende Ausgestaltung der Einrichtungskomponenten leicht möglich ist, kann das eigentliche Meßsignal als Binärprotokoll 17, das auf dem Träger, also dem variablen Offset, liegt, unmittelbar digital weiterverarbeitet werden, zum Beispiel durch den Mikrocontroller 10.

Prinzipiell kann zur Übertragung sichtbares Licht genutzt werden, wenn die gesamte Einheit relativ lichtdicht gekapselt wird. Naheliegender ist die Verwendung von Infrarotlicht, wodurch eine lichtdichte Kapselung entfallen kann. Infrarotquellen, zum Beispiel Wärmestrahlen, bewirken lediglich eine Veränderung des Offsets, der, solange er nicht das Niveau der logischen "0"-Signale auf das Niveau der logischen "1"-Signale bringt, keine schädlichen Auswirkungen hat.

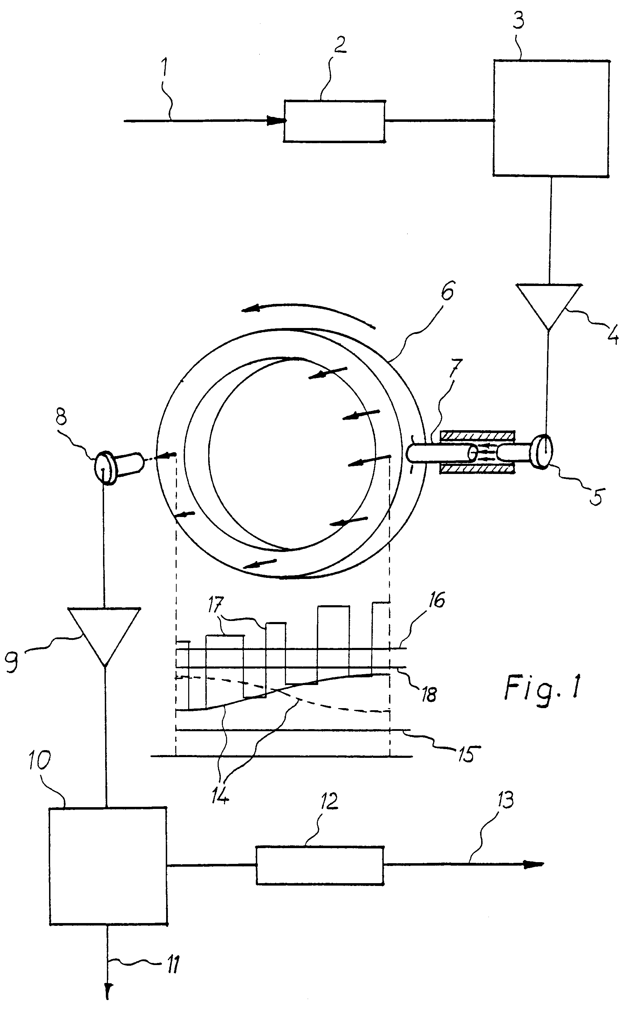

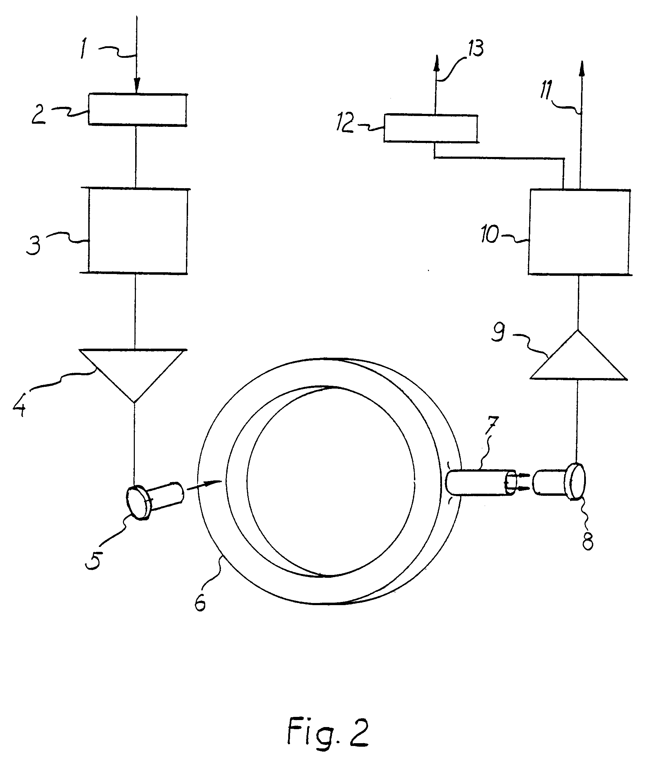

Die Figur 2 zeigt die Umkehrung der Anordnung gemäß Figur 1. Es rotiert nur die Sendeelektronik, bestehend aus dem Wandler 2, Mikrocontroller 3, Verstärker 4 und Sendediode 5. Der Glasring 6 ist nunmehr als Empfängerring zusammen mit der Auswerteelektronik aus Empfangsdiode 8, Verstärker 9, Mikrocontroller 10 und A/D-Wandler 12 ortsfest ruhend ausgebildet.

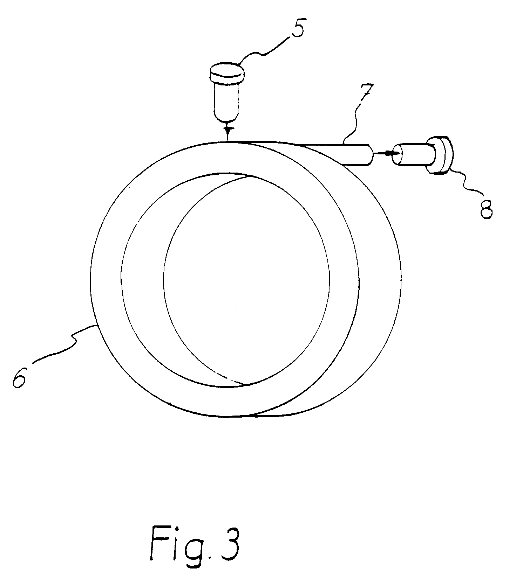

Bei den Ausführungen nach den Figuren 1 und 2 erfolgt die Datenübertragung zwischen den ortsfesten und rotierenden Teilen mittels Licht in axialer Richtung. Dies ist jedoch auch in radialer Richtung möglich. So zeigt die Figur 3 einen ortsfesten Glasring, um welchen die Sendediode 5 kreist und die Empfangsdiode 8 mit dem Ring 6 ortsfest ruht, wobei dieses Prinzip erneut umgekehrt werden kann: Der Ring 6 und die Sendediode kreisen gemeinsam, und nur die Empfangsdiode ist ortsfest.

Die erfindungsgemäße Übertragungseinrichtung garantiert eine hohe Betriebssicherheit gepaart mit Verschleißfreiheit, Wartungsfreiheit, Freiheit gegen elektromagnetische Störungen bei geringem Gewicht und sehr preiswerter Herstellung.

## Patentansprüche

1. Verfahren zum berührungslosen Übertragen von an rotierenden Maschinenelementen ermittelten Meßwerten auf stehende Auswerteeinheiten, dadurch gekennzeichnet, daß ein analoges Eingangssignal analog/digital gewandelt wird,
daß das digitale Signal in ein übertragungsfähiges Binärprotokoll gewandelt wird, welches nach gegebenenfalls notwendiger Verstärkung einer Leucht- oder Sendediode (5) zugeführt und der Lichtstrahl mit im Takt des Binärprotokolls schwankender Intensität optisch zu einem geschlossenen Lichtring geformt wird,
und daß die synchron im Takt der binären Datenübertragung schwankende Lichtintensität des Lichtringes von einer Empfangsdiode (8) aufgenommen und deren Ausgangssignale gegebenenfalls verstärkt digital weiterverarbeitet und als digitale oder nach einer Digital-/Analogwandlung als analoge Ausgangssignale ausgegeben werden.

2. Verfahren nach Anspruch 1, dadurch gekennzeichnet, daß die gesamte Sendeelektronik (2, 3, 4, 5) mit dem Lichtring rotiert und die Empfangsdiode (8) ortsfest stehend den Lichtring abtastet.

3. Verfahren nach Anspruch 1, dadurch gekennzeichnet, daß die gesamte Empfangselektronik mit dem Lichtring ortsfest ruht und die Sendediode den Lichtring umkreisend mit dem Licht-Binär-Signal beaufschlagt.

4. Verfahren nach einem der Ansprüche 1 bis 3, dadurch gekennzeichnet, daß die Lichtsignale zwischen den ruhenden und rotierenden Teilen sowohl axial als auch radial übertragbar sind.

5. Einrichtung zur Durchführung des Verfahrens nach Anspruch 1, gekennzeichnet durch einen Ring (6) aus einem klarsichtigen Material, der von der Sendediode (5) beleuchtet wird.

6. Einrichtung nach Anspruch 5, dadurch gekennzeichnet, daß die Sendediode eine Infrarot-Sendediode ist.

7. Einrichtung nach Anspruch 5 oder 6, dadurch gekennzeichnet, daß der Ring (6) aus Glas besteht.

8. Einrichtung nach Anspruch 5 oder 6, dadurch gekennzeichnet, daß der Ring (6) aus Acrylglas besteht.

9. Einrichtung nach einem der Ansprüche 5 bis 8, dadurch gekennzeichnet, daß der Ring hohl ausgebildet und mit einem Medium gefüllt ist.

10. Einrichtung nach einem der Ansprüche 5 bis 9, dadurch gekennzeichnet, daß der Ring mit einem geradlinigen Lichtführungsansatz versehen ist, vor dessen freiem Ende die Sende- oder Empfangsdiode angeordnet ist.

11. Einrichtung nach Anspruch 10, dadurch gekennzeichnet, daß der Lichtführungsansatz radial gerichtet ist.

12. Einrichtung nach Anspruch 10, dadurch gekennzeichnet, daß der Lichtführungsansatz axial gerichtet ist.

13. Verfahren nach einem der Ansprüche 1 bis 4 unter Verwendung einer Einrichtung nach einem der Ansprüche 5 bis 12, dadurch gekennzeichnet, daß eine meßtechnische Neutralisation des variablen Offsets (14), der durch die Geometrie des Glasringes (6) bedingt ist und regelmäßig oder regellos sein kann, durch definierte Signalpegel (16, 18) in Verbindung mit binärer Signalübertragung erfolgt.
